Europäisches Patentamt

European Patent Office

Office européen des brevets

⑪ Numéro de publication. **0 176 404**
**B1**

(12) # FASCICULE DE BREVET EUROPÉEN

(45) Date de publication du fascicule du brevet: 10.08.88

(21) Numéro de dépôt: 85401690.4

(22) Date de dépôt: 28.06.85

(51) Int. Cl.⁴: **B 60 R 9/04**

(54) **Barre porteuse universelle pour voitures avec et sans gouttières.**

(30) Priorité: 06.09.84 FR 8413735

(43) Date de publication de la demande: 02.04.86 Bulletin 86/14

(45) Mention de la délivrance du brevet: 10.08.88 Bulletin 88/32

(84) Etats contractants désignés: AT BE CH DE GB IT LI LU NL SE

(56) Documents cité: CH-A-216 092 DE-A-3 009 887 FR-A-2 404 647 US-A-2 833 453

(73) Titulaire: Maby, Jacques, Montfleury - Petit Parame, F-35400 Saint Malo (FR)
Titulaire: Maby, Jean Luc, Montfleury - Petit Parame, F-35400 Saint Malo (FR)

(72) Inventeur: Maby, Jacques, Montfleury - Petit Parame, F-35400 Saint Malo (FR)
Inventeur: Maby, Jean Luc, Montfleury - Petit Parame, F-35400 Saint Malo (FR)

(74) Mandataire: Chereau, Pierre Louis, NOVAPAT-CABINET CHEREAU 63bis, Boulevard Bessières, F-75017 Paris (FR)

EP 0 176 404 B1

## Description

L'invention concerne un barre porteuse universelle pouvant se monter sur pavillon de voiture pourvu ou non de gouttière.

On connaît déjà des barres porteuses pour le transport des bagages sur les pavillons de voiture.

Elles comportent toujours un tube porteur pourvu à ses extrémités de pieds supports s'adaptant aux profils latéraux du pavillon.

On distingue jusqu'à présent des barres pour pavillons équipés de gouttières et des barres pour pavillons sans gouttière.

Si les pavillons avec gouttières ne posent pas de problème, ce n'est pas le cas des pavillons sans gouttière de plus en plus nombreux sur le marché et dont les profils très différents nécessitent le plus souvent un pied support spécifique adapté au profil de chaque type de pavillon d'où la multiplication des modèles et les difficultés commerciales et de fabrication qui en découlent.

Les premiers dispositifs apparus sur le marché comportent à chaque extrémité un pied support composé d'une crosse fixée au tube porteur, pourvu d'un patin support reposant sur le pavillon et d'une patte s'appliquant contre le bord de celui-ci dans l'interstice compris entre le pavillon et le haut de la portière. Le serrage de l'ensemble étant assuré par une vis de liaison.

Ce dispositif qui donnait de bons résultats sur les pavillons offrant une résistance suffisante à l'écrasement, n'est pas efficace sur les nouveaux pavillons à tôle fine dépourvus de renforts latéraux.

C'est pourquoi sont apparus des dispositifs pourvus en plus des systèmes précédents, d'un organe de liaison rigide type câble ou tube disposé parallèlement au tube porteur et reliant les pieds supports pour en empêcher l'écartement lors de l'écrasement du pavillon.

Les inconvénients de ce système résident dans le fait qu'il faut pratiquement un organe de liaison pour chaque type de pavillon voire même différent entre l'avant et l'arrière, d'autre part, outre l'aspect inesthétique de l'ensemble, cet organe de liaison engendre des bruits très désagréables provoqués par les sifflements de l'air laminé entre l'organe de liaison et le pavillon.

On peut citer le brevet allemand DE-A1-3 009 887 propose une barre porteuse du type décrit dans le préambule de la revendication 1 destinée à être montée sur un pavillon de voiture avec et sans gouttière comportant un élément porteur muni de pied support à chaque extrémité. Un élément de liaison souple permet de plaquer, par serrage vertical, un élément d'accrochage, les pieds supports assurant l'appui.

Une telle invention assure un serrage vertical mais il nécessite un élément porteur rigide en une seule pièce sans possibilité d'adaptation.

L'invention vise à remédier à ces inconvénients, car elle ne comporte qu'un seul organe de liaison dont la longueur s'adapte aux différentes largeurs des pavillons, totalement invisible et par conséquent n'engendrant aucun bruit et assurant en outre, en une seule fois, le serrage vertical des pattes et horizontal des pieds au moyen d'un dispositif verrouillable. Dans ce but, l'invention propose une solution caractérisée et cinforme à la seconde partie de la revendication 1.

L'invention est présentée au cours de la description suivante donnée à titre d'exemple non limitatif, en regard des dessins annexés et qui permettra de comprendre la mise en pratique de l'invention.

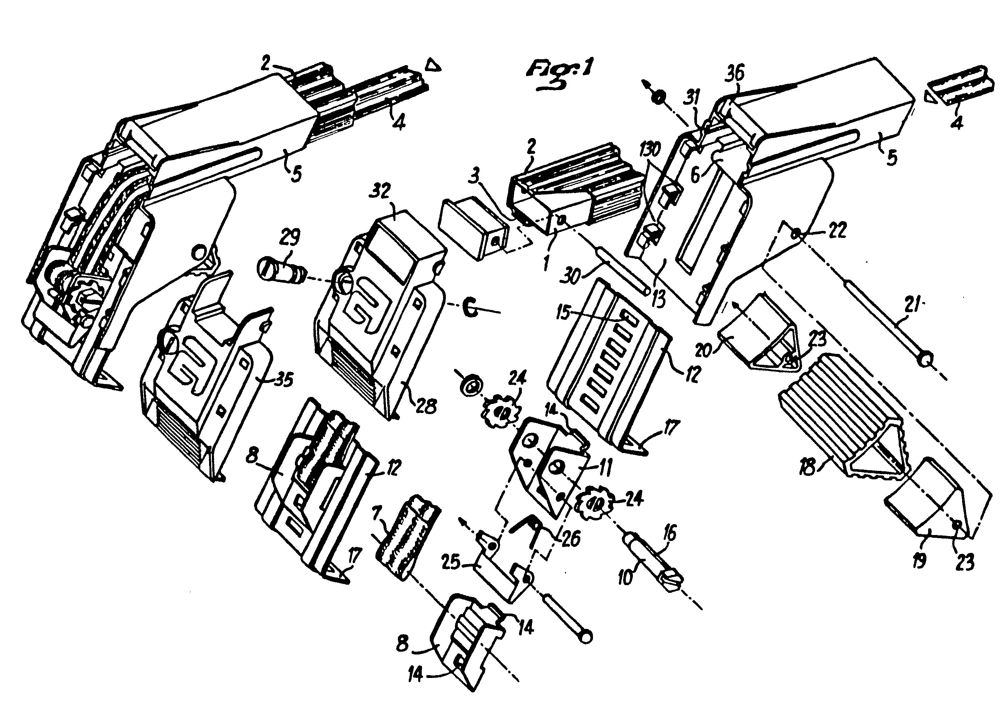

La figure 1 est une vue "éclatée" d'un exemple de réalisation selon l'invention.

La figure 2 est une coupe d'une barre située à une de ses extrémités sur un pavillon avec gouttières (fig. 2A) et, à l'autre extrémité sur un pavillon sans gouttière (fig. 2B).

Chaque barre porteuse comporte un élément porteur rigide 1 avantageusement réalisé au moyen d'un tube ou d'un profil métallique.

Cet élément est recouvert d'un gainage profilé 2 en matière plastique extrudée comportant un logement 3 dans lequel coulisse un élément de liaison souple 4 pouvant être constitué d'une sangle, d'un ruban métallique, mince ou d'un câble. En variante, le ruban pourrait passer à l'intérieur du profilé métallique 1.

L'élément porteur rigide 1 est pourvu à chacune de ses extrémités d'un pied support 5 dans lequel coulisse horizontalement l'élément 1, le gainage 2 et par conséquent l'élément de liaison 4 lequel, s'appuyant sur un bossage 6, change de direction et est fixé par une de ses extrémités 7 sur un étrier 8, son extrémité libre 9 s'enroulant sur le tambour 10 d'un tendeur 11.

L'étrier 8 et le tendeur 11 sont situés l'un et l'autre sur une patte 12 coulissant dans un logement 13 disposé dans la partie sensiblement verticale de chaque pied 5, le positionnement de l'étrier 8 et du tendeur 11 sur la patte 12 s'effectue au moyen d'agrafes 14 pénétrant dans des échancrures 15 qui permettent différentes hauteurs de fixation.

L'extrémité 9 de l'élément souple 4 est insérée dans la fente 16 du tambour 10. La rotation de celui-ci entraîne l'enroulement de l'élément 4 et par conséquent, dans un premier temps, le coulissement sensiblement vertical des pattes 12 vers le haut, puis une fois que les bords 17 de ces pattes sont en contact avec le bord latéral inférieur du pavillon, le coulissement des pieds 5 sur le profilé 2 de l'élément porteur 1 et, sous l'effet de la mise en tension de l'élément 4, le blocage de l'ensemble sur le pavillon, chaque pied reposant d'autre part sur le pavillon par l'intermédiaire d'un organe d'appui antidérapant 18, renforcé par une pièce rigide 19 ou 20 (plane ou creuse) s'articulant autour d'un axe horizontal 21 pénétrant dans les trous 22 des pieds.

Ces organes d'appui présentent la particularité d'avoir un axe décentré et plusieurs faces d'appuie 18a, 18b, 18c, de galbes différents permettant de s'adapter aux différents galbes des pavillons.

Le décentrement de l'axe 23 de l'organe d'appui différemment écarté de ses faces galbées permet de faire varier la hauteur de l'ensemble par rapport aux pavillons pour compenser les variations d'épaisseur de ceux-ci.

Le tendeur 11 est pourvu d'une ou plusieurs roues dentées 24 solidaires du tambour sur lesquelles s'appuie un cliquet 25 maintenu en pression par un ressort 26.

Le rôle de ce cliquet 25 est, d'une part d'empêcher le relâchement de la tension exercée sur l'élément de liaison 4 lors de la rotation du tambour 10, d'autre part, en libérant le tambour, de permettre le dégagement des pattes 12 du pavillon et, par conséquent d'enlever la barre porteuse.

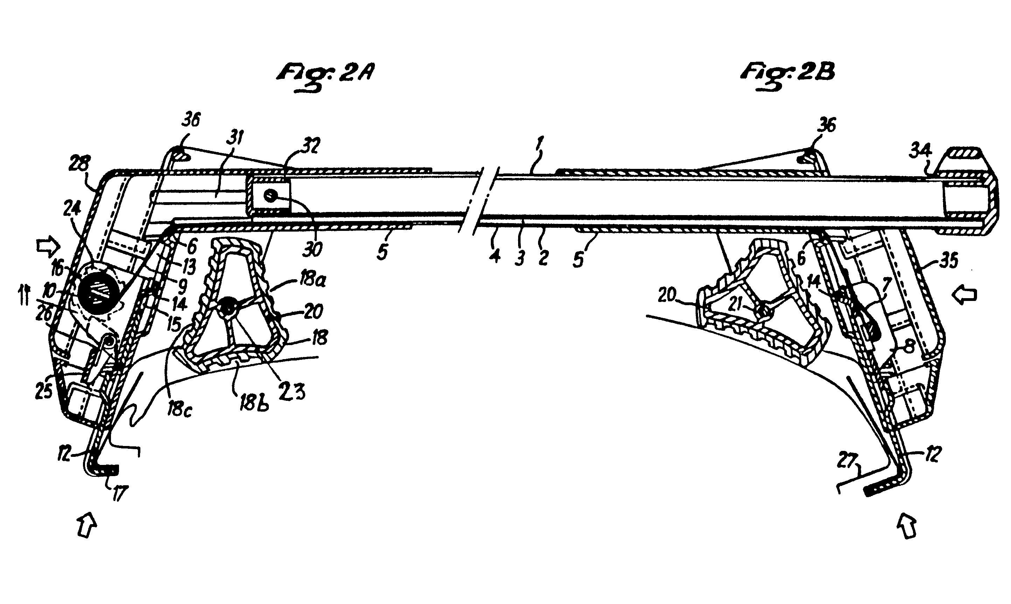

La fixation du tendeur 11 par clipsage sur la patte 12 permet l'interchangeabilité de celle-ci, lorsqu'elle sera nécessitée par des variations importantes de la pente 27 des bords de pavillons entraînant une variation identique du bord 17 de la patte 12 (Figure 2B) ou dans le cas d'un pavillon avec gouttière (Figure 2A).

Un capot 28 recouvre le mécanisme et peut s'encliqueter sur des crochets 130 et se bloquer à l'aide d'une serrure 29.

L'invention permet de réaliser deux types de barres porte-bagages.

I - Un type conforme à la norme DIN, c'est-à-dire sans saillie extérieure de l'élément porteur 1 par rapport aux pieds. Dans ce cas la retenue de l'élément 1 dans le pied 5 est assurée par un élément 30 pouvant être une goupille se déplaçant dans une rainure 31 du pied 5 et autorisant un débattement suffisant pour permettre l'adaptation de la barre porteuse aux différentes largeurs de pavillons. Cet élément 30 assure également le maintien du bouchon 32 de fermeture de l'extrémité de l'élément 1.

II - Un type de barre porteuse dont l'élément 1 de plus grande longueur que dans le type 5 traverse chaque pied et fait saillie de chaque côté, cette longueur plus importante de l'élément 1 autorise le transport d'objets de plus grande largeur et est appréciée de la clientèle.

Dans ce cas, l'élément de liaison souple 4 quitte le logement 3 du profilé 2 par des fentes 33 judicieusement disposées pour permettre à cet élément 4 de s'articuler sur le bossage 6 du pied 5, l'extrémité de l'élément 1 étant obturée par un bouchon 34 et un capot 35 sensiblement identique au capot 27, à l'exception de son extrémité supérieure qui permet le passage de l'élément 1.

En variante, et dans le cas de la barre de type 1, on peut remplacer l'étrier 8 situé sur la patte 12 par un autre tendeur de type 11 mais pourvu d'un élément supplémentaire permettant la fixation de l'extrémité fixe 7 de l'élément de liaison souple 4, le tambour servant à enrouler l'extrémité libre d'un autre élément de liaison souple, lequel en passant par la fente 35 peut, en se fixant par son autre extrémité pourvue d'un élément se crochetant sur l'élément 36 du pied opposé 5, contribuer à assurer avec sécurité l'arrimage des objets transportés.

## Revendications

1. Barre porteuse destinée à être montée sur un pavillon de voiture avec ou sans gouttière comportant un élément porteur (1), un pied support (5) à chaque extrémité de l'élément porteur (1), un élément de liaison souple (4) reliant des pattes coulissantes (12) des pieds support (5), chaque patte (12) étant munie d'un élément d'accrochage (17) et chaque pied (5) d'élément d'appui (18), caractérisée en ce que le pied support (5) est monté coulissant sur une profilé (2) entourant l'élément porteur (1) de façon que l'élément de liaison souple (4) puisse permettre lors de sa mise en tension de coincer le bord du pavillon par serrage vertical entre cet élément d'accrochage (17) et cet élément d'appui (18) et de maintenir solidement la barre sur le pavillon par serrage horizontal des pieds (5) par rapprochement de ceux-ci.

2. Barre porteuse selon la revendication 1, caractérisée en ce qu'un bossage (6) est prévu à chaque extrémité de l'élément porteur, avantageusement sur le pied support (5) coulissant sur le profilé (2) entourant l'élément porteur (1) de façon à assurer le serrage vertical et l'adaptation de la barre à la largeur du véhicule.

3. Barre porteuse selon les revendications 1 et 2, caractérisée en ce que l'élément porteur est garni d'un revêtement (2) tel qu'un profilé plastique et que l'organe de liaison souple (4) coulisse dans un logement (3) formé dans ledit profilé plastique (2) recouvrant l'élément porteur (1).

4. Barre porteuse selon les revendications 1 et 2, caractérisée en ce que chaque élément d'accrochage (17) solidaire d'une patte (12) est monté coulissant sensiblement verticalement dans le pied support (5).

5. Barre porteuse selon la revendication 4, caractérisée en ce que chaque patte (12) est munie de moyens d'accrochage (15) tels que des échancrures (15) pour la fixation à différentes hauteurs d'un étrier (8) d'accrochage d'une extrémité de l'organe de liaison souple (4), ou d'un organe de serrage (11).

6. Barre porteuse selon la revendication 1, comportant un élément d'appui (18) articulé sur le pied support (5), caractérisée en ce que l'élément d'appui (18) comporte plusieurs faces (18a, 18b, 18c) de galbes différents permettant de s'adapter aux différents galbes de pavillons.

7. Barre porteuse selon l'une des revendications précédentes, caractérisée en ce que chaque extrémité de l'élément porteur (1) est pourvue d'un élément (30) coopérant avec une rainure (31) du pied (5), qui en autorisant un certain coulissement de l'élément (1) dans le pied (5) permet de réaliser une barre porteuse conforme à la norme (DIN) interdisant une saillie extérieure de l'élément (1) par rapport au pied support (5), l'élément (30) pouvant assurer en outre le blocage d'un bouchon de fermeture (32), la rainure (31) autorisant le réglage de la barre à la largeur du véhicule.

8. Barre porteuse selon l'une des revendications 4 à 7, caractérisée en ce que l'élément porteur, ou son profilé de revêtement comporte plusieurs fentes transversales (33) pour le passage de l'organe de liaison souple (4), permettant à celui-ci de s'articuler sur le bossage (6) du pied support (5) et par conséquent autorise une saillie de l'élément porteur (1) pour favoriser le transport de charges larges.

9. Barre porteuse selon l'une des revendications à 8, caractérisée en ce que l'étrier d'accrochage (8) comporte en outre un tendeur pour assurer l'enroulement d'un organe de liaison servant à l'arrimage des charges transportées.

10. Barre porteuse selon l'une des revendications précédentes, caractérisée en ce qu'elle comporte un capot (28, 35) verrouillable sur le pied support (5) par une serrure.

**Claims**

1. A carrying bar adapted to be assembled on a car roof with or without a rain gutter including a carrying element (1), a support foot (5) at each end of said carrying element (1), a flexible linking element (4) connecting sliding lugs (12) of support feet (5), each lug (12) being provided with a catching element (17) and each foot (5) with a bearing element (18), characterized in that said support foot (5) is slidably mounted on a section (2) surrounding said carrying element (1) in such a way that said flexible linking element (4), when tensioned, allows the roof edge to be wedged through vertical clamping between said catching element (17) and said bearing element (18) and said bar to be securely maintained on the roof through horizontal clamping of said feet when bringing them nearer.

2. The carrying bar of claim 1, characterized in that a boss (6) is provided at each end of the carrying element, advantageously on said support foot (5), which slides on the section (2) surrounding the carrying element (1) in order vertical clamping and adaptation of said bar to vehicle width to be ensured.

3. The carrying bar of claims 1 and 2, characterized in that said carrying element is covered with a coating (2) such as a plastic section and in that said flexible linking element (4) slides within a housing (3) provided in said plastic section (2) covering said carrying element (1).

4. The carrying bar of claims 1 and 2, characterized in that each catching element (17) integral with a lug (12) is substantially vertically slidably mounted in said support foot (5).

5. The carrying bar of claim 4, characterized in that each lug (12) includes catching means (15) such as scallopings (15) for fixing a stirrup (8) at various heights in order to catch one end of said flexible linking element (4), or of a clamping member (11).

6. The carrying bar of claim 1, including a bearing element (18) which is hinged on said support foot (5), characterized in that said bearing element (18) includes serveral faces (18a, 18b, 18c) having different forms allowing them to be adapted to various roof shapes.

7. The carrying bar of any preceding claims, characterized in that each end of said carrying element (1) is provided with an element (30) which cooperates with a groove (31) in foot (5), which through permitting some sliding movement of element (1) in foot (5) allows a carrying bar to meet DIN standard, inhibiting an external projection of said element (1) with reference to said support foot (5), said element (30) further ensuring that a closing plug (32) be arrested, said groove (31) allowing said bar to be adjusted according to vehicle width.

8. The carrying bar of any claims 4 - 7, characterized in that said carrying element, or the coating section thereof includes serveral transversal slots (33) for said flexible linking element (4) to pass through, allowing the latter to hinge on boss (6) of said support foot (5), thereby providing a projection of said carrying element (1) in order to aid in carrying heavy loads.

9. The carrying bar of any claims 5 - 8, characterized in that said catching stirrup (8) further includes a tension member for winding up a linking element used for stowing carried loads.

10. The carrying bar of any preceding claims, characterized in that it includes a cover (28, 35) which can be locked on said support foot (5) by means of a lock.

**Patentansprüche**

1. Dachträger zur Befestigung am Dach eines Fahrzeuges mit oder ohne Regenrinne, bestehend aus einem Tragelement (1), einer Stütze (5) an jedem Ende des Tragelements (1), einem flexiblen Verbindungselement (4), das verschiebbare Klauen (12) de Stützen (5) verbindet, wobei jede Klaue (12) mit einem Befestigungselement (17) und jede Stütze mit einem Auflageelement (18) versehen ist, dadurch gekennzeichnet, daß die Stütze (5) auf einem Profil (2) gleitend gelagert ist, daß das Tragelement (1) derart umgibt, daß das flexible Verbindungselement (4) bei seiner Beaufschlagung mit Spannung den Rand des Daches durch vertikales Festklemmen zwischen diesem Befestigungselement (17) und diesem Auflageelement (18) festklemmen der Stützen (5) infolge deren Annäherung festhalten kann.

2. Dachträger nach Anspruch 1, dadurch gekennzeichnet, daß ein Vorsprung (6) an jedem Ende des Tragelements vorgesehen ist, vorteilhafterweise auf der Stütze (5) gleitend auf dem Profil (2), daß das Tragelement (1) umgibt, um das vertikale Festklemmen und die Anpassung des Dachträgers an die Breite des Fahrzeugs sicherzustellen.

3. Dachträger nach Anspruch 1 und 2, dadurch gekennzeichnet, daß das Tragelement mit einer Umhüllung (2) wie einem Kunststoffprofil versehen ist, und daß das flexible Verbindungselement (4) in einer Ausnehmung (3) gleitet, die im Kunststoffprofil (2) ausgebildet ist, das das Tragelement (1) bedeckt.

4. Dachträger nach Anspruch 1 und 2, dadurch gekennzeichnet, daß jedes an einer Klaue (12) sitzende Befestigungselement (17) im wesentlichen vertikal gleitend in der Stütze (5) angeordnet ist.

5. Dachträger nach Anspruch 4, dadurch gekennzeichnet, daß jede Klaue (12) mit Befestigungseinrichtungen (15) wie Nuten zur in unterschiedlichen Höhen erfoglenden Befestigung eines Haltebügels (8) am einen Ende des flexiblen Verbindungselementes (4) oder eines Klemmelements (11) versehen ist.

6. Dachträger nach Anspruch 1 mit einem Auflageelement (18), das an der Stütze (5) angelenkt ist, dadurch gekennzeichnet, daß das Auflageelement (18) mehrere Seiten (18a, 18b, 18c) unterschiedlicher Kontur zur Anpassung an unterschiedliche Dachkonturen aufweist.

7. Dachträger nach einem der vorherigen Ansprüche, dadurch gekennzeichnet, daß jedes Tragelement mit einem Element (30) versehen ist, das mit einem Schlitz (31) der Stütze (5) zusammenwirkt, der eine bestimmte Verschiebung des Elements (1) in der Stütze (5) und die Herstellung eines Dachträgers nach DIN-Norm zuläßt, wobei ein äußeres Vorstehen des Elements (1) bezüglich der Stütze (5) verhindert wird, das Element (30) ausserdem die Blockierung einer Verschlußkappe (32) ermöglicht und der Schlitz (31) die Einstellung des Dachträgers auf die Breite des Fahrzeugs zuläßt.

8. Dachträger nach einem der Ansprüche 4 bis 7, dadurch gekennzeichnet, daß das Tragelement oder sein Umhüllungsprofil mehrere Querschlitze (33) für den Durchgang des flexiblen Vorbindungselemente (4) aufweist, so daß dieses um Vorsprung (6) der Stütze (5) anlenkbar ist, und damit ein Vorstehen des Tragelements (1) ermöglicht, um den Transport schwerer Lasten zu begünstigen.

9. Dachträger nach einem der Ansprüche 5 bis 8, dadurch geknnzeichnet, daß der Haltbügel (8) ausserdem ein Spannelement aufweist, um das Aufwickeln einer Verbindungselements zu ermöglichen, das zum Verstauen von transportierten Lasten dient.

10. Dachträger nach einem der vorhergehenden Ansprüche, gekennzeichnet durch eine Kappe (28, 35), die an der Stütze (5) durch ein Schloß verrlegelbar ist.

Fig. 1

*Fig. 2A*

*Fig. 2B*